# EUROPEAN PATENT SPECIFICATION

(11) **EP 1 352 694 B1**
(45) Date of publication and mention of the grant of the patent: **07.05.2008**
(21) Application number: 03008213.5
(22) Date of filing: 09.04.2003
(51) Int. Cl.: B09C 1/10, C12N 1/20, C12N 1/26, A62D 3/00

(54) **Compositions for the bioremediation of soils contaminated with hydrocarbons and/or solvents and/or organic compounds**
Kompositionen für die biologische Sanierung von durch Kohlenwasserstoffen und/oder Lösungsmittel und/oder organische Verbindungen kontaminierten Böden
Compositions pour le bioremediation des sols souillés par des hydrocarbures et/ou dissolvants et/ou composés organiques

(30) Priority: 09.04.2002 IT MI20020759
(43) Date of publication of application: 15.10.2003
(73) Proprietor: Tirsi S.r.l., 27032 Ferrera Erbognone (IT)
(72) Inventor: Scevola, Mario Ercole, 20146 Milan (IT); Allevi, Giovanni, 27039 Sannazzaro de' Burgondi (IT); Allevi, Michela, 27039 Sannazzaro de' Burgondi (IT)
(74) Representative: Gervasi, Gemma

(56) References cited:
- EP-A- 0 968 773
- EP-A- 1 074 611
- US-A- 5 685 891
- US-A- 5 766 929
- US-A- 6 060 292

## Description

### Field of the invention

The present invention refers to a new composition for the bioremediation of soils contaminated with petroleum hydrocarbons and/or by organic solvents and/or by other biodegradable organic compounds.

### State of the art

The present invention offers a solution to the growing request of interventions targeted towards the decontamination of areas, ex-sites of anthropical activity, which are decommissioned and reclassified from industrial areas to residential or to public or private green space or which however require to be reclaimed as in the case of dumping or accidental spillages.

Among the various techniques for the decontamination of contaminated areas, bioremediation offers the advantage of being completely eco-compatible, avoids resorting to drastic interventions and allows a notable economic saving, especially when the level of contamination and the local conditions allow the treatment *in situ*, avoiding the transfer of large amounts of soil to the landfills or to the treatment centres.

The traditional bioremediation technique consists of the attempt to re vitalise and promote the proliferation of the indigenous microbial flora surviving in the contaminated soil through the optimisation of the levels of oxygen and humidity in the soil and the addition of micronutrients such as nitrogen and phosphorus.

For example, Document D1 discloses a composition for bioremediation of soils contaminated with halogenated compounds, consisting essentially of sulfate salts, iron derivatives, electron donors, yeast extracts, glacial tills, nitrogen compounds and phosphorous compounds.

The composition may further include compost, surfactants and/or a muriate potash.

The bioremediation process disclosed in this document occurs by addition of the above composition of nutrients to the soil where it promotes the growth of indigenous bacteria helping them to degrade halogenated contaminants.

Document D2 discloses a process of decontamination of soil from methoxychlor wherein the contaminated soil is mixed with amendment material such as agricultural waste, municipal waste sludge, activated sludge or horse, cow, sheep, turkey, chicken or fish manure (column 2, lines 14-27). The mixture thus obtained is then composted at a temperature between 20°C and 65°C, in the presence of a water content between 40% and 100% and alterning composting cycles wherein the redox potential is maintained below - 200mV with composting steps wherein said potential is maintained above 100 mV (see column 1, lines 29-42). The desired degree of biodegradation is not achieved in the first anerobic/aerobic treatment sequence but it is necessary to repeat such sequence one or more times in order to obtain satisfactory results.

The bioremediation can be carried out on non removed soil which is oxygenated by the insufflation of air through a system of perforated tubes driven into the soil (bioventing). Alternatively, especially when the soil contamination extends very deep into it, the soil to be decontaminated is excavated and placed in piles (biopiles) which allow greater control over the above mentioned parameters.

Sometimes, bacterial preparations of different species, directed towards degrading the contaminants, are also added to the soil.

The kinetics of the biodegradative activity is influenced by environmental conditions such as temperature, humidity, pH, pO₂. the ratio between possible nutrients present and, obviously, by the level of contamination.

The traditional bioremediation techniques lead however to uncertain or partial results and require extremely long times.

Therefore the need is felt to develop a bioremediation technique which allows the attainment of the complete and fast decontamination of contaminated soil.

### Summary of the invention

The present invention refers to a new composition for the bioremediation of contaminated soils comprising a compost derived from the composting of plant lignocellulosic residues, biological sludges and/or other fermentable residues and having a respiration index comprised between 500 and 1000, integrated with a consortium of bacteria and/or moulds adapted and/or induced to metabolise the contaminant(s) which one desires to remove from the soil. Preferably, said bacteria and/or moulds are isolated from the contaminated soil, reinvigorated and multiplied to the desired concentration.

It has now surprisingly been found that such a composition, when used in the decontamination of soils contaminated by hydrocarbons and/or organic solvents and/or organic compounds, allows the reduction of the degree of contamination of such soils to within legal limits in extremely rapid times, notably inferior to the ones required by traditional bioremediation methods.

The present invention refers, in addition, to a procedure for the bioremediation of soils comprising the use of such a composition.

### Detailed description of the invention

The subject of the present invention is a composition for the bioremediation of soils contaminated by hydrocarbons and/or solvents and/or organic compounds comprising:
a) a compost derived from plant lignocellulosic materials, from biological sludges, from the wet fractions of solid urban wastes, from animal manure or from mixtures thereof and having a respiration index ranging between 500 and 1000; and
b) a consortium of bacteria and/or moulds adapted and/or induced to metabolise the particular contaminant(s) which one desires to remove from the soil;
wherein is the amount of said bacteria and/or moulds per m³ of said composition corresponds to that present in a volume ranging between 1000 and 5000 ml of a culture broth containing between 20 and 40 g of wet biomass/litre.

The composition of the invention is particularly suitable for the bioremediation of soils contaminated by petroleum hydrocarbons, alcohols, for example methanol, isopropanol, n-butanol, organic acids and derivatives, for example phenylacetic acid and esters, for example butyl acetate, ketones, for example acetone, or mixtures thereof.

Particularly preferred is the use, in the composition of the invention, of a compost derived from plant lignocellulosic materials, from biological sludges or from a mixture thereof. Plant lignocellulosic materials suitable for the preparation of the compost according to the invention are, for example, pruning wastes, fruit/vegetable wastes and agricultural residues.

The compost of the composition of the invention is prepared according to techniques known in the art, for example in biocells with forced aeration or in piles periodically turned over.

During the formation of the compost, in the thermophilic phase, high temperatures, greater than 70°C are reached, which lead to the elimination of possible pathogenic germs present.

The micro-organisms present in the composition of the invention, preferably isolated from the same soil which one desires to decontaminate and non-genetically modified, belong both to the bacteria (for example *Pseudomonas. Rhyzobium, Agrobacterium*, *Achromobacter, Micrococcus, Bacillus, Actinomyces, Arthrobecter, Streptomyces)* and to the moulds (for example, *Rhyzopus, Mucor. Aspergillus, Fusarium*).

Preferably, the bacteria and/or moulds present in the composition of the invention are isolated from contaminated soil and revitalised. The term "revitalised bacteria and/or moulds" means bacteria and/or moulds in which, in addition to the activation of the proliferative capacity also functional enzymatic induction towards the biodegradation of the contaminants present in the soil has been maintained and/or initiated.

For example, representative samples of soil are taken from various areas of the contaminated site, the autochthonal microbial flora is isolated on agarised culture medium and then revitalised and multiplied in a liquid culture based on simple and complex carbohydrates, protein extracts and mineral salts. Small quantities, in the order of ppm, of the contaminant(s) discovered in the soil to be reclaimed are added to said culture media with the aim of maintaining or initiate in the micro-organisms the functional enzymatic induction towards the biodegradation of the contaminating substances identified. Preferably, the above mentioned contaminants are added to the culture medium in quantities comprised between 5% and 20% with respect to the level of contamination found in the contaminated soil. The preparation of the culture broth to which the compost is added occurs in submerged aerated culture, at a temperature comprised between 20°C and 30°C, until the end of the logarithmic growth phase, when the biomass content of the culture medium is comprised between 20 and 40 g/litre.

The culture broth can be added directly to the compost in ratios ranging between 1000 and 5000 ml per m³ of compost. Alternatively, the culture broth can be previously dried onto a porous solid support, preferably constituted of cereal bran and/or porous mineral granules

In such a case the culture broth is sprayed onto the porous support, preferably in quantities ranging between 0.75 and 1 ml per g of support, and the wet material is lyophilised or dried under vacuum at a temperature ≤ 30°C.

To the compost is added a quantity of micro-organisms on the solid support equivalent to that contained in a volume of between 1000 and 5000 ml of the above mentioned culture broth.

Preferably, the composition of the invention comprises also micro-nutrients. Preferably, said micro-nutrients are constituted of inorganic salts of phosphorous and possibly oligo-elements such as salts of Fe²⁺ and of Co²⁺.

In the cases in which the soil to decontaminate is excessively compact the composition of the invention can comprise high porosity minaral granules such as, for example, zeolites, montmorillonites and complex silicates, which promote the diffusion of oxygen inside the mass of soil to be decontaminated.

A further object of the present invention is a procedure for the bioremediation of soils contaminated by hydrocarbons and or organic solvents and/or organic compounds comprising the mixing of the contaminated soil with the composition of the invention in quantities ranging between 1% and 50% v/v, preferably between 20% and 30%.

Preferably, such a procedure comprises the following steps:
a) the excavation of the contaminated soil;
b) the addition to the contaminated soil of the composition of the invention in quantities ranging between 1 % and 50% v/v, preferably between 20% and 30%, and mixing so as to obtain a homogeneous mass;
c) the incubation of the mixture at a temperature comprised between 10°C and 40°C, an oxygen tension of at least 2% and humidity comprised between 20% and 65% for a period of time ranging between 30 and 180 days as a function of the type and the level of the contaminants;

Preferably step c) is conducted incubating the mixture in biopiles in which the above mentioned oxygen tension is maintained by the insufflation of air through a system of perforated tubes connected to external ventilators or by turning mechanically at intervals of at least 10-15 days.

Alternatively, the mixture obtained in step b) is replaced into the same excavation site and the above mentioned oxygen tension is maintained by the insufflation and/or the aspiration of air through a system of perforated tubes driven into the soil (bioventing).

The bioremediation procedure according to the invention allows to obtain a fertilised, decontaminated soil which can be used for the recovery of marginal areas or recycled into agricultural soils.

### EXAMPLE 1

Soil contaminated by petroleum hydrocarbons, removed from an ex-fuel depot installation has been made homogeneous by remixing and passing through a rotary riddle with 7 cm mesh.

To 1 m³ of soil, made homogeneous, has then been added a composition constituted by;
a) 0.2 m³ of plant compost ranging in size between 1.5 and 6 cm having a respiration index of 620, and
b) 1000 ml of a culture broth, having a cellular biomass content of 32 g/l, of micro-organisms isolated from the contaminated soil and grown in liquid culture containing 100 ppm of petroleum hydrocarbons.

Following careful homogenisation the material has been placed in a pile (biopile) in an environment with a temperature between 15°C and 18°C and aerated by mechanical turning every 10 days.

The experiment had an overall duration of 45 days.

As a control, a pile containing only contaminated soil has been maintained in parallel to the treated biopile.

In concurrence with every turning, both the treated biopile and the control pile have been humidified with the same amounts of water with the aim of ensuring a good degree of humidity.

The analysis of the mean hydrocarbon content carried out on samples removed at time zero and following 45 days have given the results reported in Table I:

**Table I**

| ppm with reference to dried substance | | | | |
|---|---|---|---|---|
| Days | Total hydrocarbons | | Alkyl benzenes | |
| | Control pile | Treated biopile | Control pile | Treated biopile |
| 0 | 1600 | 1519 | 1285 | 1205 |
| 45 | 1238 | 70 | 1010 | 52 |

### EXAMPLE 2

1 m³ of contaminated soil from Example 1 has been added to by 1.5 times the quantity of composition used in Example 1.

As a control, a pile of 1 m³ of contaminated soil to which it has been added an aqueous solution containing micro-nutrients has been maintained in parallel to the treated biopile.

The results obtained following 50 days are reported in Table II

**Table II**

| ppm with reference to dried substance | | |
|---|---|---|
| Days | Total hydrocarbons | |
| | Control pile | Treated biopile |
| 0 | 1550 | 1475 |
| 50 | 1190 | 10 |

### EXAMPLE 3

A sample of soil contaminated by a mixture of methanol and n-butanol in a ratio of 30/60 with a contamination level in the order of 1800 ppm with reference to the dried substance has been mixed with 3% v/v of granular zeolites and 25% v/v of a composition constituted by:
a) the compost obtained from composting of plant residues (3 parts) and biological sludges (1 part) with a respiration index of 530, and
b) 1500 ml per m³ of compost of a culture broth, with a biomass content of 26 g/l, of micro-organisms isolated from contaminated soil and grown in a liquid culture containing 150 ppm of a 30/60 methanol and n-butanol mixture.

The soil has then been placed in a biopile and maintained under the same environmental conditions of Example 1.

After 120 days a 90% reduction from the initial contamination content was observed.

### EXAMPLE 4

A sample of soil contaminated by isopropanol with a level of contamination in the order of 850 ppm with reference to the dried substance has been mixed with 3% v/v of granular zeolite and 25% v/v of a composition constituted by:
a) the compost obtained from the composting of plant residues (1 part) and the wet fraction of differentially separated solid urban wastes (1 part) and having a respiration index of 650, and
b) 3000 ml per m³ of compost of a culture broth with a biomass content of 32 g/l of micro-organisms isolated from contaminated soil and grown in liquid culture containing 110 ppm of isopropanol.

The soil has then been placed in a biopile and maintained under the same environmental conditions of Example 1.

Following 90 days of observation, a 80% reduction with respect to the initial contamination values has been revealed.

### EXAMPLE 5

A sample of soil contaminated with 650 ppm, with reference to the dried substance, of a 1:1 mixture of butyl acetate and acetone has been mixed with 10% v/v of granular zeolite and 30% v/v of a composition constituted by:
a) the compost obtained from the composting of plant residues, and
b) 4500 ml per m³ of compost of a culture broth, with a biomass content equal to 24 g/l, of micro-organisms isolated from contaminated soil and grown in liquid culture containing 50 ppm of a 1:1 mixture of butyl acetate and acetone.

The soil has then been placed in a biopile and maintained at a temperature of between 15°C and 18°C, with insufflation of air through the biopile.

After 50 days, a 78% reduction of the contaminant with respect to the initial values has been observed.

### EXAMPLE 6

A sample of soil contaminated with 1200 ppm, with reference to the dried substance, of phenylacetic acid has been mixed with 30% v/v of a composition constituted by;
a) the compost obtained from the composting of plant residues (3 parts) and bovine manure (1 part) and having a respiration index of 700, and
c) 5000 ml per m³ of compost of a culture broth, with a biomass content of 35 g/l, of micro-organisms isolated from contaminated soil and grown in liquid culture in the presence of 100 ppm of phenylacetic acid.

The soil has then been placed in a biopile and aerated by turning every 10 days. After 60 days a reduction of the content of the contaminant by 69% was observed.

## Claims

1. A composition for the bioremediation of soil contaminated by hydrocarbons and/or solvents and/or organic compounds consisting essentially of:
a) a compost derived from plant lignocellulosic materials, from biological sludges, from the humid fractions solid urban wastes, from animal manure or from mixtures thereof and having a respiration index comprised between 500 and 1000;
b) a consortium of bacteria and/or moulds in a liquid culture broth or in a culture broth dried onto a porous solid support; said bacteria and/or moulds have been isolated from soil contaminated with said hydrocarbons and/or solvents and/or organic compounds and have been subjected to a multiplication and revitalisation procedure through the following steps:
A) sampling of soil from different areas of the contaminated site;
B) the isolation from the samples obtained in step A) of a consortium of bacteria and/or moulds adapted and/or induced to metabolise the contaminant(s) which one desires to remove from the contaminated site on agarized culture media containing said contaminant(s);
C) the revitalisation and multiplication of the consortium of bacteria and/or moulds isolated in step B) by incubation in liquid culture containing the contaminant(s) which one desires to remove from the contaminated site at a temperature ranging between 20° and 30°C until reaching a wet biomass content comprised of between 20 and 40 g/l.
whereby their proliferative capacity is activated and their ability to metabolise the particular contaminant(s) which one desires to remove from the soil is maintained and/or stimulated,
c) optionally, high porosity mineral granules;
wherein the amount of said consortium of bacteria and/or moulds per m³ of said composition corresponds to that present in a volume comprised between 1000 and 5000 ml of a culture broth containing between 20 and 40 g of wet biomass/litre.

2. A composition according to claim 1 wherein said soil is contaminated by petroleum hydrocarbons, alcohols, organic acids and derivatives, ketones or mixtures thereof.

3. A composition according to claim 2 wherein said soil is contaminated with methanol, isopropanol, n-butanol, phenylacetic acid, butyl acetate, acetone or mixtures thereof.

4. A composition according to claims 1 to 3 wherein said consortium of bacteria and/or moulds derives from the soil which one desires to decontaminate.

5. A composition according to claims 1 to 4 wherein said compost derives from plant lignocellulosic materials and/or biological sludges.

6. A composition according to claims 1 to 5 wherein said high porosity mineral granules (c) are selected from zeolites, montmorillonites and complex silicates.

7. A composition according to claims 1 to 6 wherein said consortium of bacteria and/or moulds is absorbed onto a porous solid support.

8. A composition according to claims 1-7 wherein the bacteria and/or moulds are obbtained through a process in which in step (C) said contaminants are present in the culture medium in quantities ranging from 5% to 20% with respect to the mean contamination levels of the soil samples of step (A).

9. A process for the bioremediation of soil contaminated by hydrocarbons and/or solvents and/or organic compounds comprising the mixing of contaminated soil with a quantity comprised between 1% and 50% v/v of the composition according to claims 1 to 8.

10. A process according to claim 9 in which the contaminated soil is mixed with a quantity comprised between 20% and 30% v/v of said composition.

11. A process according to claim 10 comprising the following steps:
1) the excavation of the contaminated soils;
2) the addition to the contaminated soil of a composition according to claims 1 to 8 in a quantity comprised between 1% and 50% v/v and mixing until obtaining a homogeneous mass;
3) the incubation of the mixture at a temperature ranging from 10°C to 45°C, an oxygen tension of at least 2% and humidity comprised between 20% and 65% for a period of time ranging from 30 to 180 days.

12. A process according to claim 11 wherein in step 2) said composition is added in quantities ranging from 20% to 30% v/v.

13. A process as claimed in claims 9 to 12 wherein said soil is contaminated with petroleum hydrocarbon methanol, isopropanol, n-butanol, phenylacetic acid, butyl acetate, acetone or mixtures thereof.

## Patentansprüche

1. Zusammensetzung für die Biosanierung von Boden, der durch Kohlenwasserstoffe und/oder Lösungsmittel und/oder organische Verbindungen kontaminiert ist, bestehend im Wesentlichen aus:
a) einem Kompost, der von pflanzlichen Lignocellulosematerialien, aus biologischen Schlämmen, aus den feuchten Fraktionen von festen städtischen Abfällen, aus tierischem Mist oder aus Mischungen davon stammt und einen Respirationsindex im Bereich zwischen 500 und 1000 aufweist;
b) einem Konsortium aus Bakterien und/oder Schimmelpilzen in einer flüssigen Kulturnährlösung oder in einer auf einem porösen, festen Träger getrockneten Kulturnährlösung, wobei genannte Bakterien und/oder Schimmelpilze aus mit genannten Kohlenwasserstoffen und/oder Lösungsmitteln und/oder organischen Verbindungen kontaminierten Böden isoliert wurden und sie einem Vermehrungs- und Wiederbelebungsvorgang durch die folgenden Schritte unterzogen wurden:
A) Probennahme von Boden von unterschiedlichen Bereichen der kontaminierten Stelle;
B) die Isolierung eines Konsortiums aus Bakterien und/oder Schimmelpilzen, die an die Metabolisierung eines oder mehrerer Kontaminanten, die aus der kontaminierten Stelle entfernt werden sollen, auf agarisiertem Kulturmedium, das genannte(n) Kontaminanten enthält, angepasst sind und/oder diese induzieren, aus den in Schritt A) erhaltenen Proben;
C) die Wiederbelebung und Vermehrung des Konsortiums aus in Schritt B) isolierten Bakterien und/oder Schimmelpilzen durch Inkubation in einer flüssigen Kultur, welche den/die Kontaminanten enthält, die aus der kontaminierten Stelle entfernt werden sollen, bei einer Temperatur im Bereich zwischen 20 und 30 °C, bis ein nasser Biomassegehalt im Bereich zwischen 20 und 40 g/l erreicht wird;
wodurch ihre proliferative Fähigkeit aktiviert wird und ihre Fähigkeit, den/die bestimmten Kontaminanten, die aus dem Boden entfernt werden sollen, zu metabolisieren, aufrechterhalten und/oder stimuliert wird,
c) gegebenenfalls Mineralgranulate mit hoher Porosität;
wobei die Menge an genanntem Konsortium aus Bakterien und/oder Schimmelpilzen pro m³ der genannten Zusammensetzung der entspricht, die in einem Volumen im Bereich zwischen 1000 und 5000 ml einer Kulturnährlösung, die zwischen 20 und 40 g nasser Biomasse/Liter enthält, enthalten ist.

2. Zusammensetzung gemäß Anspruch 1, wobei genannter Boden durch Mineralölkohlenwasserstoffe, Alkohole, organische Säuren und Derivate, Ketone oder Mischungen davon kontaminiert ist.

3. Zusammensetzung gemäß Anspruch 2, wobei genannter Boden mit Methanol, Isopropanol, n-Butanol, Phenylessigsäure, Butylacetat, Aceton oder Mischungen davon kontaminiert ist.

4. Zusammensetzung gemäß den Ansprüchen 1 bis 3, wobei genanntes Konsortium aus Bakterien und/oder Schimmelpilzen aus dem Boden stammt, der dekontaminiert werden soll.

5. Zusammensetzung gemäß den Ansprüchen 1 bis 4, wobei genannter Kompost von pflanzlichen Lignocellulosematerialien und/oder biologischen Schlämmen stammt.

6. Zusammensetzung gemäß den Ansprüchen 1 bis 6, wobei genannte Mineralgranulate mit hoher Porosität (c) aus Zeolithen, Montmorilloniten und komplexen Silikaten ausgewählt werden.

7. Zusammensetzung gemäß den Ansprüchen 1 bis 6, wobei genanntes Konsortium aus Bakterien und/oder Schimmelpilzen auf einem porösen festen Träger absorbiert wird.

8. Zusammensetzung gemäß den Ansprüchen 1-7, wobei die Bakterien und/oder Schimmelpilze durch ein Verfahren erhalten werden, in dem in Schritt (c) genannte Kontaminanten in dem Kulturmedium in Mengen im Bereich von 5 % bis 20 % bezogen auf die mittleren Kontaminationsniveaus der Bodenproben aus Schritt (A) enthalten sind.

9. Verfahren zur Biosanierung von Boden, der durch Kohlenwasserstoffe und/oder Lösungsmittel und/oder organische Verbindungen kontaminiert ist, umfassend das Mischen von kontaminiertem Boden mit der Zusammensetzung gemäß den Ansprüchen 1 bis 8 in einer Menge im Bereich zwischen 1 und 50 Vor.-%.

10. Verfahren gemäß Anspruch 9, in dem der kontaminierte Boden mit genannter Zusammensetzung in einer Menge im Bereich zwischen 20 und 30 Vol.-% vermischt wird.

11. Verfahren gemäß Anspruch 10, umfassend die folgenden Schritte:
1) das Ausgraben der kontaminierten Böden;
2) die Zugabe einer Zusammensetzung gemäß den Ansprüchen 1 bis 8 zu dem kontaminierten Boden in einer Menge im Bereich zwischen 1 und 50 Vol.-% und Mischen, bis eine homogene Masse erhalten wird;
3) das Inkubieren der Mischung bei einer Temperatur im Bereich von 10 °C bis 45 °C, einer Sauerstoffspannung von mindestens 2 % und einer Feuchtigkeit im Bereich zwischen 20 % und 65 % über einen Zeitraum im Bereich von 30 bis 180 Tagen.

12. Verfahren gemäß Anspruch 11, wobei in Schritt 2) genannte Zusammensetzung in Mengen im Bereich von 20 bis 30 Vol.-% zugegeben wird.

13. Verfahren gemäß den Ansprüchen 9 bis 12, wobei genannter Boden mit Mineralölkohlenwasserstoffen, Methanol, Isopropanol, n-Butanol, Phenylessigsäure, Butylacetat, Aceton oder Mischungen davon kontaminiert ist.

## Revendications

1. Composition pour la bioremédiation d'un sol pollué par des hydrocarbures et/ou des solvants et/ou des composés organiques consistant essentiellement en :
a) un compost dérivé de matériaux lignocellulosiques végétaux, de boues biologiques, de fractions humides de déchets urbains solides, de crottin animal ou de mélanges de ceux-ci et ayant un indice de respiration compris entre 500 et 1000 ;
b) un consortium de bactéries et/ou de moisissures dans un bouillon de culture liquide ou dans un bouillon de culture séché sur un support solide poreux ; lesdites bactéries et/ou moisissures ayant été isolées à partir du sol pollué par lesdits hydrocarbures et/ou solvants et/ou composés organiques et ayant été soumises à une procédure de multiplication et de revitalisation via les étapes suivantes:
A) échantillonnage du sol dans différentes zones du site pollué ;
B) isolation à partir des échantillons obtenus dans l'étape A) d'un consortium de bactéries et/ou de moisissures adaptées et/ou induites pour métaboliser le(s) polluant(s) que l'on souhaite éliminer du site pollué sur des milieux de culture agarisés contenant le(s)dit(s) polluant(s) ;
C) revitalisation et multiplication du consortium de bactéries et/ou de moisissures isolées dans l'étape B) par incubation dans une culture liquide contenant le(s) polluant(s) que l'on souhaite éliminer du site pollué à une température comprise entre 20 et 30°C jusqu'à obtention d'une teneur de biomasse humide comprise entre 20 et 40 g/l,
de façon que leur capacité proliférative soit activée et que leur capacité à métaboliser le(s) polluant(s) particulier(s) que l'on souhaite éliminer du site pollué soit maintenue et/ou stimulée,
c) éventuellement, des granules minéraux à porosité élevée ;
dans laquelle la quantité dudit consortium de bactéries et/ou de moisissures par m³ de ladite composition correspond à celle présente dans un volume compris entre 1000 et 5000 ml d'un bouillon de culture contenant entre 20 et 40 g de biomasse humide/litre.

2. Composition selon la revendication 1, dans laquelle ledit sol est pollué par des hydrocarbures de pétrole, des alcools, des acides organiques et dérivés, des cétones ou des mélanges de ceux-ci.

3. Composition selon la revendication 2, dans laquelle ledit sol est pollué par du méthanol, de l'isopropanol, du n-butanol, de l'acide phénylacétique, de l'acétate de butyle, de l'acétone ou des mélanges de ceux-ci.

4. Composition selon les revendications 1 à 3, dans laquelle ledit consortium de bactéries et/ou de moisissures dérive du sol que l'on souhaite dépolluer.

5. Composition selon les revendications 1 à 4, dans laquelle ledit compost dérive de matériaux lignocellulosiques végétaux et/ou de boues biologiques.

6. Composition selon les revendications 1 à 5, dans laquelle lesdits granules minéraux à porosité élevée (c) sont choisis parmi les zéolites, les montmorillonites et les silicates complexes.

7. Composition selon les revendications 1 à 6, dans laquelle ledit consortium de bactéries et/ou de moisissures est absorbé sur un support solide poreux.

8. Composition selon les revendications 1 à 7, dans laquelle les bactéries et/ou les moisissures sont obtenues par un procédé dans lequel, dans l'étape (C) lesdits polluants sont présents dans le milieu de culture en des quantités allant de 5 à 20 % par rapport aux niveaux de pollution moyens des échantillons de sol de l'étape (A).

9. Procédé pour la bioremédiation d'un sol pollué par des hydrocarbures et/ou des solvants et/ou des composés organiques comprenant le mélange du sol pollué avec une quantité comprise entre 1 et 50 % v/v de la composition selon les revendications 1 à 8.

10. Procédé selon la revendication 9, dans lequel le sol pollué est mélangé avec une quantité comprise entre 20 et 30 % v/v de ladite composition.

11. Procédé selon la revendication 10 comprenant les étapes suivantes:
1) l'excavation des sols pollués;
2) l'ajout au sol pollué d'une composition selon les revendications 1 à 8 en une quantité comprise entre 1 et 50 % v/v et mélange jusqu'à obtention d'une masse homogène ;
3) l'incubation du mélange à une température allant de 10 à 45°C, une tension d'oxygène d'au moins 2 % et une humidité comprise entre 20 et 65 % pendant une période de temps de 30 à 180 jours.

12. Procédé selon la revendication 11, dans lequel dans l'étape 2) ladite composition est ajoutée en des quantités allant de 20 à 30 % v/v.

13. Procédé selon les revendications 9 à 12, dans lequel ledit sol est pollué par des hydrocarbures de pétrole, du méthanol, de l'isopropanol, du n-butanol, de l'acide phénylacétique, de l'acétate de butyle, de l'acétone ou des mélanges de ceux-ci.
